# EUROPÄISCHE PATENTANMELDUNG

(11) **EP 2 568 271 A2**
(43) Veröffentlichungstag der Anmeldung: **13.03.2013**
(21) Anmeldenummer: 12183180.4
(22) Anmeldetag: 05.09.2012
(51) Int. Cl.: G01L 9/00, G01L 19/00

(54) **Drucksensor und Füllstandsmesseinrichtung**

(30) Priorität: 12.09.2011 DE 102011082522; 01.03.2012 DE 202012002071 U
(71) Anmelder: Kuhnke Automation GmbH & Co. KG, 23714 Malente (DE)
(72) Erfinder: Blumberg, Bernd, 24217 Schönberg (DE); Cypris, Roland, 24235 Wendtorf (DE)
(74) Vertreter: Volmer, Jochen

(57) **Zusammenfassung**

Die Erfindung betrifft einen kapazitiven Drucksensor (1, 1') mit einem ersten Grundflächenkörper (2, 70), einem zweiten Grundflächenkörper (4) und einem zwischen dem ersten Grundflächenkörper (2, 70) und dem zweiten Grundflächenkörper (4) mittels wenigstens eines Abstandhalters (7, 8) befestigten flächigen Membrankörper (3), wobei wenigstens an einer Seite des Membrankörpers (3) ein Hohlraum (5, 6) ausgebildet ist, der von einer Seite des Membrankörpers (3), einem Abstandhalter (7, 8) und einer Seite eines Grundflächenkörpers (2, 4, 70) begrenzt ist, wobei der Grundflächenkörper (2, 4, 70) wenigstens eine den Grundflächenkörper (2, 4, 70) durchdringende Öffnung (9, 10) aufweist, die den Hohlraum (5, 6) mit einem Volumen außerhalb des Drucksensors (1) verbindet, so dass sich bei einer Druckänderung in dem Hohlraum (5, 6) das Volumen des Hohlraums (5, 6) durch Durchbiegung des Membrankörpers (3) verändert.

Bei dem erfindungsgemäßen kapazitiven Drucksensor (1, 1') sind die Grundflächenkörper (2, 4) und der Membranflächenkörper (3) als Leiterplatten auf der Basis eines nichtleitenden Leiterplattensubstrats (22, 32, 42) ausgebildet.

## Beschreibung

Diese Anmeldung beansprucht die Prioritäten der deutschen Patentanmeldung mit dem amtlichen Aktenzeichen 10 2011 082 522.3, eingereicht am 12. September 2011, sowie des deutschen Gebrauchsmusters mit dem amtlichen Aktenzeichen 20 2012 002 071.4, eingereicht am 01.03.2012, deren Gesamtinhalt hier jeweils durch Rückbeziehung aufgenommen wird.

Die Erfindung betrifft einen kapazitiven Drucksensor mit einem ersten Grundflächenkörper, einem zweiten Grundflächenkörper und einem zwischen dem ersten Grundflächenkörper und dem zweiten Grundflächenkörper mittels wenigstens eines Abstandhalters befestigten flächigen Membrankörper, wobei wenigstens an einer Seite des Membrankörpers ein Hohlraum ausgebildet ist, der von einer Seite des Membrankörpers, einem Abstandhalter und einer Seite eines Grundflächenkörpers begrenzt ist, wobei der Grundflächenkörper wenigstens eine den Grundflächenkörper durchdringende Öffnung aufweist, die den Hohlraum mit einem Volumen außerhalb des Drucksensors verbindet, so dass sich bei einer Druckänderung in dem Hohlraum das Volumen des Hohlraums durch Durchbiegung des Membrankörpers verändert, wobei wenigstens die den Hohlraum begrenzenden Flächen des Grundflächenkörpers und des Membrankörpers eine metallische Schicht oder Beschichtung aufweisen.

Die Erfindung betrifft weiter eine Matrix kapazitiver Drucksensoren, eine Verwendung einer Leiterplatte, eine Füllstandsmesseinrichtung, einen Sitz mit einem kapazitiven Drucksensor sowie ein Kraftfahrzeug.

Gattungsgemäße kapazitive Drucksensoren enthalten ein oder zwei Kondensatoren. Im Falle von zwei Kondensatoren sind diese durch einen Membrankörper getrennt aufeinanderliegend angeordnet. Der oder die Kondensatoren ist bzw. sind im Wesentlichen Plattenkondensatoren mit zwei flächigen, einander gegenüberliegenden Elektroden. Diese schließen jeweils einen Hohlraum ein, der mit einem Dielektrikum gefüllt ist. Bei dem gattungsgemäßen kapazitiven Drucksensor ist bzw. sind der oder die Hohlräume jeweils mit einem gasförmigen Medium gefüllt, etwa einem Luft-Dampf-Gemisch.

Da der Membrankörper eine gewisse Flexibilität aufweist, reagiert er auf eine Druckänderung in dem Hohlraum oder zwischen den beiden Hohlräumen mit einer Durchbiegung. Dadurch wird der Abstand der Elektroden zueinander verändert und somit die Kapazität des Kondensators. Im Falle zweier Kondensatoren wird der Abstand der Elektroden eines der Kondensatoren vergrößert, der andere verkleinert. Somit verändern sich auch die Kapazitäten der Kondensatoren gegenläufig. Da im Falle zweier Kondensatoren die außenliegenden Elektroden ortsfest sind, bleibt das Gesamtvolumen der beiden Hohlräume während der Druckbeaufschlagung konstant. Auswertungsschaltungen solcher Kondensatoren umfassen häufig einen internen Verstärker, dessen Ausgangssignal von der Differenz der Kapazitäten abhängig ist.

Entsprechende kapazitive Drucksensoren sind häufig Teil einer Elektronik, so dass es bekannt ist, die äußeren Elektroden aus Leiterplatten zu formen, beispielsweise aus US 5,134,886 A. Der Membrankörper ist in dem Fall aus einem Diaphragma aus einem Polycarbonat mit einer Dicke von etwa 13 µm aufgebaut, das einseitig mit Nickel metallisiert ist. Die mechanische Verbindung einer solchen Membran mit einer Leiterplatte ist jedoch aufwändig und kann zu Schädigungen der empfindlichen Membran führen.

Demgegenüber liegt der Erfindung die Aufgabe zugrunde, einen kapazitiven Drucksensor, eine Füllstandsmesseinrichtung für einen Flüssigkeitstank, eine Druckmesseinrichtung sowie einen Sitz, insbesondere Komfort- oder Massagesitz und/oder Autositz, mit einem oder mehreren mit Druckluft beaufschlagbaren aufblasbaren Kissen zur Verfügung zu stellen, die einfach herzustellen und sicher abdichtend und/oder steuerbar sind, sowie weitere vorteilhafte Anwendungen des kapazitiven Drucksensors.

Diese Aufgabe wird bei einem kapazitiven Drucksensor mit einem ersten Grundflächenkörper, einem zweiten Grundflächenkörper und einem zwischen dem ersten Grundflächenkörper und dem zweiten Grundflächenkörper mittels wenigstens eines Abstandhalters befestigten flächigen Membrankörper, wobei wenigstens an einer Seite des Membrankörpers ein Hohlraum ausgebildet ist, der von einer Seite des Membrankörpers, einem Abstandhalter und einer Seite eines Grundflächenkörpers begrenzt ist, wobei der Grundflächenkörper wenigstens eine den Grundflächenkörper durchdringende Öffnung aufweist, die den Hohlraum mit einem Volumen außerhalb des Drucksensors verbindet, so dass sich bei einer Druckänderung in dem Hohlraum das Volumen des Hohlraums durch Durchbiegung des Membrankörpers verändert, wobei wenigstens die den Hohlraum begrenzenden Flächen des Grundflächenkörpers und des Membrankörpers eine metallische Schicht oder Beschichtung aufweisen, dadurch gelöst, dass die Grundflächenkörper und der Membrankörper als Leiterplatten auf der Basis eines nichtleitenden Leiterplattensubstrats ausgebildet sind.

Der erfindungsgemäße kapazitive Drucksensor ist sehr einfach herzustellen, da nicht nur die äußere Elektrode oder die äußeren Elektroden in Form der Grundflächenkörper, sondern auch der Membrankörper als Leiterplatte auf der Basis eines nicht leitenden Leiterplattensubstrats ausgebildet ist. Leiterplattenhersteller verfügen über die nötige Fertigungstechnik, Bauteile aus Schichten günstig herzustellen, so dass dieser Membrankörper als eine Lage einer Leiterplatte realisiert werden kann. Auch der oder die Abstandhalter können als eine Lage einer Leiterplatte realisiert werden, die zuvor mit entsprechenden Ausfräsungen zur Bildung eines Hohlraumes versehen worden sind.

Die Leiterplatten sind wenigstens am Ort der Hohlräume metallisch beschichtet, zuzüglich einer elektrischen Kontaktierung der entsprechenden Flächen. Die metallische Beschichtung kann auch über die unmittelbare den Hohlraum begrenzende Fläche hinausgehen. Vorteilhafterweise gibt es zur Ausbildung von Leiterbahnen allerdings auch beschichtungsfreie Zonen der Leiterplatte.

Im Vergleich zu bekannten dünnen Membranen stellt die erfindungsgemäße Lösung mit einem auf einem Leiterplattensubstrat basierenden Membrankörper eine mechanisch einfach zu behandelnde und gegen extreme mechanische Beanspruchungen resistente technische Lösung dar. Die Technik für Leiterplatten ist ausgereift. Da nur Leiterplattenmaterialien verwendet werden, können die üblichen Herstellungsprozesse im Wesentlichen ohne Modifikationen zur Herstellung eines erfindungsgemäßen kapazitiven Drucksensors verwendet werden, ohne dass aufwändige Zwischenschritte zur Integration andersartiger Membranen notwendig sind. Die entsprechenden erfindungsgemäßen Drucksensoren sind damit auch kostengünstiger in der Herstellung.

Entsprechende Leiterplatten weisen auch eine ausreichende Flexibilität aus, so dass sie sich bei Beaufschlagung eines Hohlraumes mit einem Druck durchbiegen und eine messbare Kapazitätsänderung erzeugen.

Vorzugsweise sind beidseits des Membrankörpers mittels Abstandhaltern Hohlräume ausgebildet und weisen die die Hohlräume begrenzenden Flächen der Grundflächenkörper und des Membrankörpers eine metallische Schicht oder Beschichtung auf. Dies betrifft den zuvor beschriebenen Fall, dass zwei aufeinander angeordnete Kondensatoren als Drucksensor eingesetzt werden, die bei Druckbeaufschlagung an einer Seite eine gegenläufige Volumenveränderung und Kapazitätsveränderung erfahren. Dadurch wird die Messgenauigkeit gegenüber einem einzelnen variablen Kondensator als Drucksensor erhöht.

In einer vorteilhaften Weiterbildung weist wenigstens ein Grundflächenkörper auch an der Außenseite des Drucksensors eine metallische Schicht oder Beschichtung auf. Vorzugsweise sind in diesem Fall an der eine metallische Schicht oder Beschichtung aufweisenden Außenseite elektronische Bauteile und/oder Kabelanschlüsse angeordnet. Auf diese Weise lässt sich der erfindungsgemäße Drucksensor sehr einfach in eine vorhandene Elektronik einbinden bzw. lässt sich die Elektronik sehr kompakt direkt auf dem Drucksensor anordnen, wobei die Leiterplatten ihre ursprüngliche Bestimmung als Sockel zur Aufnahme elektronischer Bauteile einschließlich der entsprechend ausgedruckten und ausgeätzten Leiterbahnen wahrnehmen.

Der Drucksensor weist ebenfalls vorteilhaft einen Temperatursensor auf, der insbesondere an einer seiner Außenseiten angeordnet ist. Ein solcher Temperatursensor kann als Elektronikbauteil auf eine Leiterplatte des Drucksensors aufgesetzt werden und mit einer gegebenenfalls ebenfalls auf dem Drucksensor angeordneten Elektronik ausgelesen werden.

Insbesondere zur Anwendung innerhalb korrosiver Umgebungen ist vorzugsweise vorgesehen, dass die elektronischen Bauteile und/oder metallischen Flächen der Kabelanschlüsse eingekapselt sind. Dies kann auch für die metallischen Kontakte und Oberflächen an der Außenseite des Drucksensors teilweise oder insgesamt vorgesehen sein und einen gegebenenfalls vorhandenen Temperatursensor einschließen.

Der elektrische Anschluss der Elektroden des oder der Kondensatoren erfolgt vorzugsweise mittels einer Durchkontaktierung zum Membrankörper und/oder zu einem Grundflächenkörper in Form einer metallisierten, insbesondere aufgekupferten, Bohrung durch einen Grundflächenkörper, den Membrankörper und/oder einen Abstandhalter. Dies ist eine aus der Technologie zur Herstellung mehrschichtiger Leiterplatten bekannte Vorgehensweise, die bei den bisherigen Drucksensoren, die eine flexible Membran aus einer dünnen, metallisierten Kunststofffolie umfassten, nicht anwendbar war.

Der Membrankörper basiert vorzugsweise auf einem Leiterplattensubstrat mit einer Dicke zwischen 100 und 200 µm, insbesondere etwa 150 µm. Eine Leiterplatte mit einer entsprechenden Dicke weist eine genügende Festigkeit gepaart mit einer ausreichenden Flexibilität für die erfindungsgemäße Anwendung als Membrankörper in einem kapazitiven Drucksensor auf. Ein solcher Membrankörper und/oder Grundflächenkörper basiert vorzugsweise auf einem Leiterplattensubstrat auf der Grundlage eines Glasfasergewebes oder eines Glasvlieses. Ein solches Glasfasergewebe entspricht insbesondere dem FR4-Standard für Leiterplatten-Basismaterial, das üblicherweise ein Glasfasergewebe in einer Matrix aus einem Di- oder Tetra-Epoxidharz (Epoxy) aufweist. Dieses kann halogenfrei sein oder Halogen enthalten. Einfachere Materialien nach dem FR2-Standard oder dem FR3-Standard, die auf einem Papier in Phenolharz oder Epoxidharz basieren, sind ebenfalls im Rahmen der Erfindung anwendbar. Auch qualitativ hochwertigere Leiterplatten-Basismaterialien, beispielsweise nach dem Standard FR5 oder FR5 BT, die ebenfalls auf einem Glasfasergewebe beruhen und erhöhte Erweichungstemperaturen aufweisen, sind anwendbar. Weitere Standards, die ihm Rahmen der Erfindung angewendet werden können, sind CEM1 und CEM3, die auf Papier bzw. einem Glasvlies mit einer Epoxymatrix beruhen.

Solche Leiterplattensubstrate, insbesondere auf der Grundlage von Glasfasergeweben oder Glasvliesen in einer Harzmatrix, weisen eine hohe Stabilität bei gleichzeitiger Flexibilität auf.

Erfindungsgemäß und die der Erfindung zugrunde liegende Aufgabe lösend können auch mehrere Drucksensoren in einer gemeinsamen Leiterplattenanordnung aus Grundflächenkörpern, Membrankörper und Abstandhalter zusammen bzw. nebeneinander in einer Matrix von erfindungsgemäßen Drucksensoren angeordnet und umfasst sein. So können in einem Arbeitsgang auch beispielsweise Matrizen von erfindungsgemäßen Drucksensoren hergestellt werden, die als Sensormatrix oder nach einer Abtrennung aus dem Matrixverbund als Einzelsensoren einsetzbar sind. Eine solche Matrix kann zwei oder mehr Drucksensoren in einer Reihe oder in mehreren Reihen, in hexagonalen oder anderen Anordnungen umfassen.

Die der Erfindung zugrunde liegende Aufgabe wird auch durch eine Verwendung einer Leiterplatte auf der Basis eines nichtleitenden Leiterplattensubstrats als Membrankörper in einem kapazitiven Drucksensor gelöst, insbesondere in einem kapazitiven Drucksensor, der erfindungsgemäß, wie oben beschrieben, ausgeführt ist. Das Leiterplattensubstrat ist in diesem Fall ebenso vorzugsweise ausgebildet, wie oben beschrieben. Mittels der Leiterplatte können auch mehrere Drucksensoren nebeneinander, etwa in einer Matrixanordnung, verwirklicht sein.

Die der Erfindung zugrunde liegende Aufgabe wird ebenfalls gelöst durch eine Füllstandsmesseinrichtung für einen Flüssigkeitstank, dessen Volumen im befüllten Zustand in ein unteres Teilvolumen mit Flüssigkeit und ein oberes Teilvolumen mit einem gasförmigen Medium aufgeteilt ist, umfassend ein im Tank, insbesondere im Wesentlichen senkrecht, angeordnetes Tauchrohr, das in einem Volumen ein gasförmiges Medium beinhaltet und nach unten offen ist und in einem wenigstens teilweise befüllten Zustand des Flüssigkeitstanks in die Flüssigkeit eintaucht, die dadurch weitergebildet ist, dass das Tauchrohr an seinem oberen Ende von einem, insbesondere oben beschriebenen erfindungsgemäßen, kapazitiven Drucksensor, abgedichtet ist, der an einer Oberseite und einer Unterseite des Drucksensors jeweils eine Druckanschlussöffnung aufweist, wobei die Druckanschlussöffnung an der Unterseite einen Einlass für das gasförmige Medium im Tauchrohr bildet. Bei der erfindungsgemäßen Füllstandsmesseinrichtung wird die Eigenschaft des Drucksensors, insbesondere des erfindungsgemäßen Drucksensors, ausgenutzt, dass er mechanisch sehr stabil ist und zur Abdichtung eines Tauchrohrs geeignet ist. Eine solche Abdichtung eines Tauchrohrs, in dem ein hoher Druck des darin enthaltenen gasförmigen Mediums entstehen kann, erfordert eine gute mechanische Stabilität, die insbesondere durch den erfindungsgemäßen Drucksensor gewährleistet ist.

Das Messprinzip beruht darauf, eine Druckdifferenzmessung zwischen der Atmosphäre bzw. dem gasförmigen Medium im Tauchrohr und der Atmosphäre bzw. dem gasförmigen Medium im oberen Teilvolumen des Tanks durchzuführen. Am unteren Rand des Tauchrohrs herrscht die Gleichgewichtsbedingung, dass der Schweredruck der ruhenden Flüssigkeit innerhalb und außerhalb des Tauchrohrs gleich groß sein muss. Dieser setzt sich aus einem Anteil, der auf die Wassersäule zurückgeht, und einem Anteil des über der Wasseroberfläche herrschenden Gasdrucks zusammen. Wenn im Tank im Wesentlichen Normaldruck von ca. 1000 hPa herrschen und das untere Ende des Tauchrohrs sich nicht mehr als einige Dutzend cm unterhalb der Flüssigkeitsoberfläche befindet, überwiegt der Gasdruck den von der Flüssigkeitssäule ausgeübten Druck bei weitem, da der atmosphärische Normaldruck in etwa dem Druck einer Wassersäule von 10 m Höhe entspricht.

Im Tank ist die Höhe der Flüssigkeitssäule am unteren Ende des Tauchrohrs innerhalb des Tauchrohrs kleiner als außerhalb des Tauchrohrs, da etwas von der Flüssigkeit im Tank durch die untere Öffnung in das Tauchrohr eindringt. Das Gasvolumen im Tauchrohr wird damit etwas komprimiert und der Gasdruck im Tauchrohr etwas erhöht.

Die Differenz der Höhe der Flüssigkeitssäulen innerhalb und außerhalb des Tauchrohrs bis zur Unterkante des Tauchrohrs ist wegen des Eindringens von Flüssigkeit in das Tauchrohr etwas kleiner als die gesamte Eintauchtiefe des Tauchrohrs in die Flüssigkeit. Der durch die Flüssigkeitssäule im Tauchrohr ausgeübte Druck ist kleiner als der durch die Flüssigkeitssäule außerhalb des Tauchrohrs ausgeübte Druck. Dies wird durch eine Erhöhung des Drucks des Gases im oberen Teil des Tauchrohrvolumens ausgeglichen. Dieser Ausgleichsdruck wird durch die Messung der Druckdifferenz zwischen dem Gas im Tank und dem Gas im Tauchrohr ermittelt. Bei konstanter Geometrie des Tanks und des Tauchrohrs ist diese Messung in erster Näherung nur noch von der Füllhöhe der Flüssigkeit im Tank abhängig.

Die genannte Differenzmessung wird in einer vorteilhaften Ausbildung der erfindungsgemäßen Füllstandsmesseinrichtung so ausgeführt, dass der Drucksensor im oberen Teilraum des Tanks angeordnet ist und die Druckanschlussöffnung an der Oberseite des Drucksensors einen Einlass für das gasförmige Medium im oberen Teilraum des Tanks bildet. Dies bedeutet eine direkte Druckdifferenzmessung innerhalb des Tanks selber. Der Gasdruck des gasförmigen Mediums im oberen Teilvolumen des Tanks drückt somit direkt durch die Druckanschlussöffnung an der Oberseite des Drucksensors auf den einen Hohlraum im Drucksensor und über die Oberfläche der Flüssigkeit im unteren Teilvolumen sowie das Tauchrohr und die untere Druckanschlussöffnung auf den unteren Hohlraum, so dass sich dieser Anteil aus dem Gasdruck im oberen Teilvolumen unmittelbar aufhebt.

Bei dem Einsatz einer solchen Füllstandsmesseinrichtung in einem korrosiven Medium, beispielsweise einem Kraftstofftank für Benzin oder Diesel oder einen anderen Kraftstoff, ist es in diesem Fall vorteilhaft, die entsprechende Elektronik entweder außerhalb des Tanks anzuordnen oder, wenn sie auf der Oberfläche des Drucksensors angeordnet ist, einzukapseln. Dadurch wird auch die Gefahr von Funkenbildung und anschließender Explosion im Tank vermieden.

In einer alternativen, ebenfalls vorteilhaften Ausführungsform wird diese Problematik dadurch umgangen, dass der Drucksensor in oder außerhalb einer Außenwandung des Tanks angeordnet ist und die Druckanschlussöffnung an der Oberseite des Drucksensors einen Einlass für ein gasförmiges Medium außerhalb des Tanks bildet. Hier wird eine Differenzmessung zwischen dem Druck im Druckrohr, der füllstandsabhängig ist, und der äußeren Atmosphäre gebildet. Dies ist insbesondere dann ebenfalls genau, wenn der Druck im oberen Teilvolumen des Tanks mit dem Druck der äußeren Atmosphäre ausgeglichen ist, weil beispielsweise beide miteinander in Verbindung stehen.

In beiden vorgenannten Fällen ist vorzugsweise vorgesehen, dass ein zweiter kapazitiver Drucksensor, der insbesondere ebenfalls erfindungsgemäß wie oben beschrieben ausgebildet ist, in oder am Tank angeordnet ist, wobei der zweite Drucksensor an zwei Seiten jeweils eine Druckanschlussöffnung aufweist, von denen eine Druckanschlussöffnung mit dem gasförmigen Medium im oberen Teilvolumen des Tanks verbunden ist und die andere Druckanschlussöffnung mit dem gasförmigen Medium außerhalb des Tanks verbunden ist.

Wenigstens einer der beiden Drucksensoren misst somit eine Druckdifferenz eines Volumens im Inneren des Tanks, nämlich des Volumens im Tauchrohr und/oder des Volumens im oberen Teilvolumen, zum Druck in der Umgebungsatmosphäre. Auf diese Weise ist eine Kalibrierung oder Anpassung der Druckdifferenzmesswerte auf einen Bezugsdruck möglich. Die Abhängigkeit des Druckdifferenzmesswerts vom Druck des Gases im oberen Teilraum des Tanks ist insbesondere dann von Bedeutung, wenn sich im Tank eine Druckerhöhung um 0,2 bar oder mehr einstellt.

In einer vorteilhaften Weiterbildung ist vorgesehen, dass ein außerhalb oder an der Außenseite des Tanks angeordneter Drucksensor zur Messung des Drucks in der Umgebung des Tanks umfasst ist und/oder ein oder mehrere Temperatursensoren im Tauchrohr und/oder im Tank und/oder außerhalb des Tanks angeordnet ist oder sind. Damit können Schwankungen des Luftdrucks außerhalb des Tanks und/oder Temperaturschwankungen im Tauchrohr, im Tank oder außerhalb des Tanks erfasst und zur Korrektur des ermittelten Füllstandswertes verwendet werden. Insbesondere Temperaturschwankungen im abgeschlossenen kleinen Volumen des Tauchrohrs, aber auch eines abgeschlossenen Tanks, können zu Fehlbestimmungen der Füllstandshöhe führen. So kann eine Temperaturerhöhung von beispielsweise 10 K zu einer Fehlmessung der Füllstandshöhe von einigen Millimetern führen. Die genauen funktionalen Abhängigkeiten sind insbesondere von der Länge des Tauchrohrs und der Eintauchtiefe in der Flüssigkeit abhängig.

Ferner wird die der Erfindung zugrunde liegende Aufgabe auch durch eine Druckmesseinrichtung zur Messung eines Drucks in einem pneumatischen System gelöst, das dadurch weitergebildet ist, dass ein zuvor beschriebener, erfindungsgemäßer kapazitiver Drucksensor zur Druckmessung umfasst ist. Anwendungen hierzu sind beispielsweise die Messung eines Drucks in einem oder mehreren aufblasbaren Kissen eines Sitzes, der insbesondere eine Massagefunktion hat, wobei das Aufblasen des oder der Kissen zur Einstellung einer Sitzposition oder zur Ausübung einer Massagefunktion dienen. Auch kann mittels des erfindungsgemäßen kapazitiven Drucksensors der Saugrohrdruck im Saugrohr eines Kraftfahrzeugs, beispielsweise eines Motorrads, auf einfache und schnelle Weise bestimmt werden.

Ebenso wird die der Erfindung zugrunde liegende Aufgabe durch einen Sitz, insbesondere Komfort- oder Massagesitz und/oder Autositz, mit einem oder mehreren mit Druckluft beaufschlagbaren aufblasbaren Kissen gelöst, der dadurch weitergebildet ist, dass das oder die Kissen mit einem oder mehreren zuvor beschriebenen erfindungsgemäßen kapazitiven Drucksensoren zur Messung des Drucks in dem jeweiligen Kissen und zur Steuerung der Druckluftbeaufschlagung des jeweiligen Kissens verbunden ist oder sind und/oder dass eine erfindungsgemäße zuvor beschriebene Druckmesseinrichtung umfasst ist. Damit sind die Kissen des Sitzes sicher und schnell steuerbar, so dass eine Einstellung oder eine Massagefunktion des Sitzes realisiert wird. Solche Funktionen von Sitzen sind insbesondere in Komfortsitzen und Massagesitzen, besonders auch in Sitzen in Kraftfahrzeugen, etwa Automobilen oder Lastkraftwagen, einsetzbar.

Ferner wird die der Erfindung zugrundeliegende Aufgabe auch durch ein Kraftfahrzeug, insbesondere einen Personenkraftwagen oder einen Lastkraftwagen, mit einer erfindungsgemäßen oben beschriebenen Füllstandsmesseinrichtung und/oder einem erfindungsgemäßen oben beschriebenen Sitz gelöst.

Die Verwendung der Leiterplatte zur Ausbildung des Drucksensors oder der Drucksensoren erlaubt mit wenig Aufwand die Integration der pneumatischen und der elektronischen Mess- und Steuerkomponenten und -funktionalitäten. Dies eignet sich insbesondere für die Serienfertigung, sowohl für Kleinserien als auch für die Massenfertigung in hohen Stückzahlen, etwa für die Automobilindustrie.

Ebenfalls eignet sich der erfindungsgemäße kapazitive Drucksensor erfindungsgemäß für die Verwendung in Beatmungsgeräten, bei denen es wichtig ist, die bei der Beatmung auftretenden Drücke und Druckschwankungen genau und schnell zu messen, um eine effektive und schadlose Beatmung zu gewährleisten. Die der Erfindung zugrunde liegende Aufgabe wird daher auch durch eine Verwendung wenigstens eines erfindungsgemäßen kapazitiven Drucksensors in einem Beatmungsgerät sowie ein entsprechendes Beatmungsgerät mit einem erfindungsgemäßen Drucksensor gelöst.

Der erfindungsgemäße kapazitive Drucksensor eignet sich erfindungsgemäß ebenfalls für eine Integration in so genannte "Air Boards" der Anmelderin, wie sie beispielsweise in DE 20 2004 020 490 U1 offenbart sind. Dabei handelt es sich um Anschlussplatten für Aktuatoren, die mit Strom zur Schaltstellungsänderung und mit Fluid als Betätigungsmedium für externe Verbraucher zu versorgen sind. Diese Anschlussplatten sind ebenfalls als Leiterplatten aufgebaut mit Leiterbahnen zur Stromversorgung, die eine bauliche Einheit mit Kanalplatten bilden, in denen Kanäle eingearbeitet sind, die das Fluid aufnehmen und leiten. Diese Leiterplatten können vorteilhaft den erfindungsgemäßen kapazitiven Drucksensor aufweisen.

Die der Erfindung zugrunde liegende Aufgabe wird daher auch durch eine Verwendung wenigstens eines erfindungsgemäßen kapazitiven Drucksensors in einer Anschlussplatte für Aktuatoren sowie eine entsprechende Anschlussplatte für Aktuatoren mit einem erfindungsgemäßen Drucksensor gelöst, die eine bauliche Einheit aus einer Leiterplatte mit wenigstens einer Leiterbahn und einer Kanalplatte mit Fluidkanälen für ein Fluid aufweisen, wobei insbesondere der wenigstens eine Drucksensor zur Druckmessung an einem Fluid eine Verbindung mit einem Fluidkanal aufweist. Die Integration des kapazitiven Drucksensors erfolgt in diesem Fall insbesondere in die Leiterplatte der Anschlussplatte.

Die zu den genannten Erfindungsgegenständen, also dem erfindungsgemäßen kapazitiven Drucksensor, der Matrix von Drucksensoren, der Verwendung und der erfindungsgemäßen Füllstandsmesseinrichtung genannten Eigenschaften, Vorteile und Merkmale gelten ohne Einschränkungen auch für die jeweils anderen Erfindungsgegenstände.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: einen schematischen Querschnitt durch ein Ausführungsbeispiel eines erfindungsgemäßen Drucksensors,
- Fig. 2: eine schematische Darstellung eines ersten Ausführungsbeispiels einer erfindungsgemäßen Füllstandsmesseinrichtung,
- Fig. 3: eine schematische Darstellung eines weiteren Ausführungsbeispiels einer erfindungsgemäßen Füllstandsmesseinrichtung,
- Fig. 4: eine schematische Darstellung eines weiteren Ausführungsbeispiels einer erfindungsgemäßen Füllstandsmesseinrichtung,
- Fig. 5: eine schematische Darstellung einer Anwendung kapazitiver Drucksensoren in einem pneumatischen System und
- Fig. 6: eine Draufsicht auf eine Leiterplatte eines erfindungsgemäßen Drucksensors.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

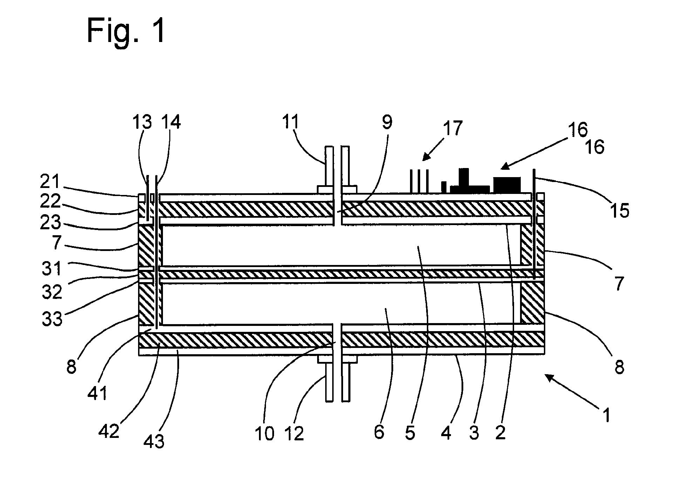

In Fig. 1 ist eine schematische Querschnittsdarstellung durch einen erfindungsgemäßen Drucksensor 1 dargestellt, der auf der Basis zweier Rücken an Rücken angeordneter Kondensatoren aufgebaut ist, die jeweils als Plattenkondensatoren mit Luft gefüllten Hohlräumen 5, 6 aufgebaut sind. Die Platten der Plattenkondensatoren werden durch einen oberen ersten Grundflächenkörper 2, einen flächigen Membrankörper 3 und einen zweiten, unteren Grundflächenkörper 4 gebildet. Der erste, obere Kondensator, wird durch den oberen, ersten Grundflächenkörper 2 und den flächigen Membrankörper 3 gebildet, der zweite Kondensator durch den zweiten Grundflächenkörper 4 und den flächigen Membrankörper 3. Zwischen den Grundflächenkörpern 2, 4 und dem Membrankörper 3 befinden sich jeweils Abstandhalter 7, 8, die den Abstand zwischen den Elektroden der Grundflächenkörper 2, 4 und dem Membrankörper 3 bestimmen.

Bei den Grundflächenkörpern 2 und 4 handelt es sich um Leiterplatten mit Leiterplattensubstraten 22, 42, die jeweils im Ausführungsbeispiel gemäß Fig. 1 beidseitig metallische Schichten 21, 23 bzw. 41, 43 aufweisen. Die metallischen Schichten 23 und 41 der Grundflächenkörper 2 und 4 bilden dabei jeweils die flächigen Elektroden des jeweiligen Kondensators. Der Membrankörper 3 ist ebenfalls aus einem Leiterplattensubstrat 32 aufgebaut, der beiderseits metallische Schichten 31, 33 aufweist, die die jeweiligen Elektroden des oberen bzw. unteren Kondensators bilden.

Die beiden Hohlräume 5, 6 sind jeweils über Öffnungen 9, 10 mit der jeweiligen äußeren Atmosphäre bzw. dem außenliegendem Volumen verbunden, so dass unterschiedliche, an den beiden Druckanschlüssen 11, 12 anliegende Drücke zu unterschiedlichen Drücken in den Hohlräumen 5, 6 führen. Ein Druckunterschied in den Hohlräumen 5, 6 führt zu einer Durchbiegung des Membrankörpers 3 in Richtung auf den Hohlraum 5, 6 mit dem geringeren Druck. Dies führt zu einer Verkleinerung des Abstands der Oberfläche des Membrankörpers 3 zu der jeweiligen Elektrode 23 oder 41 und zu einer Erhöhung der Kapazität des betroffenen Kondensators und zu einer Verringerung der Kapazität des Kondensators, dessen Hohlraum 5, 6 vergrößert wird.

An der oberen Fläche des in Fig. 1 gezeigten Drucksensors 1 ist auf der metallischen Schicht 21 außerdem dargestellt, dass elektronische Bauteile 16, die beispielsweise eine Verstärkung der Messelektronik sein können, und Kabelanschlüsse 17, die beispielsweise als Steckstifte ausgebildet sein können, angeordnet sind, in der typischen Weise, wie dies auf metallisierten oder mit metallischen Schichten versehenen Leiterplatten mit entsprechenden, beispielsweise fotolithographisch erstellten Leiterbahnen, üblicherweise erfolgt.

Die elektrische Kontaktierung der Elektroden 23, 31, 33, 41 erfolgt im Ausführungsbeispiel über Elektrodenanschlüsse 13, 14, 15. Dabei bildet der Elektrodenanschluss 13 einen Anschluss für die eine Elektrode bildende metallische Schicht, und der Elektrodenanschluss 14 einen Anschluss für die als Elektrode ausgebildete metallische Schicht 41. Diese Elektrodenanschlüsse sind an der Oberseite als Stifte ausgebildet. Sie werden gegenüber den anderen metallischen Komponenten isoliert durchgeführt, bis sie zu der entsprechenden metallischen Schicht, die sie kontaktieren, durchsto-βen. Alternativ können die Anschlüsse im Inneren auch als Durchkontaktierung in Form einer metallisierten, insbesondere aufgekupferten, Bohrung durch die entsprechenden Grundflächenkörper, Membrankörper und/oder Abstandhalter ausgebildet sein, wie dies bei mehrschichtigen Leiterplatten bekannt ist.

Entsprechendes gilt für den Anschluss 15, der die metallischen Schichten 31 und 33 des Membrankörpers 32 beide kontaktiert. Diese sind vorzugsweise als Erdung ("Ground") ausgeführt.

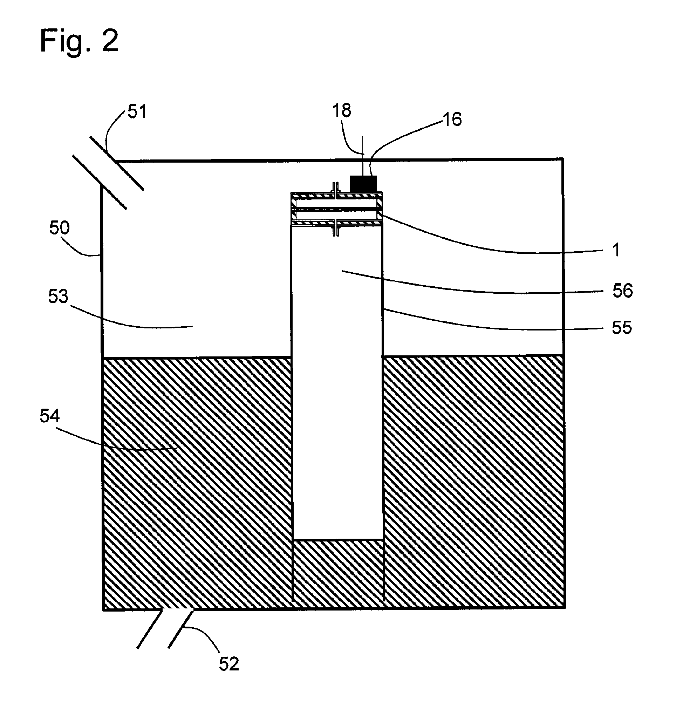

In Fig. 2 ist ein erstes Ausführungsbeispiel einer erfindungsgemä-βen Füllstandsmesseinrichtung eines Flüssigkeitstanks 50 dargestellt. Der Tank 50 umfasst einen Tankeinlass 51 zur Befüllung mit einer Flüssigkeit und einen Tankauslass 52 an der Unterseite des Tanks 50 zur Entnahme von Flüssigkeit aus dem Tank. In diesem Ausführungsbeispiel ist im Tank 50 ein Tauchrohr 55 ausgebildet, dessen Seitenwände bis kurz über den Boden des Tanks 50 reichen und einen schmalen Spalt zum Boden hin bilden, durch den Flüssigkeit in das Volumen 56 im Tauchrohr eindringen kann. Dadurch wird in dem Volumen 56 ein gasförmiges Medium, das Luft und Dämpfe der Flüssigkeit beinhaltet, im Tauchrohr 55 eingeschlossen und, je nach Füllstandshöhe der Flüssigkeit komprimiert und unter Druck gesetzt. Die Flüssigkeit sammelt sich im Tank 50 in einem unteren Teilvolumen 54, das sich außerhalb des Tauchrohrs 55 und etwas innerhalb des Tauchrohrs erstreckt. Der obere Teil des Tanks 50, das obere Teilvolumen 53, bildet den nicht mit Flüssigkeit eingenommenen Teil des Volumens des Tanks 50.

In dem in Fig. 2 dargestellten Ausführungsbeispiel befindet sich das Tauchrohr 55 mit einem Drucksensor 1, der in diesem Ausführungsbeispiel im Wesentlichen wie der Drucksensor 1 in Fig. 1 ausgebildet ist, zur Gänze innerhalb des Tanks 50. Dies bedeutet, dass der untere Druckanschluss 12 den unteren Hohlraum 6 zum Volumen 56 im Tauchrohr 55 öffnet, während der obere Druckanschluss 11 das obere Volumen 5 des Drucksensors 1 zum oberen Teilvolumen 53 im Tank 50 öffnet. Im oberen Hohlraum 5 des Drucksensors 1 herrscht somit der gleiche Druck wie im oberen Teilvolumen 53 des Tanks 50, während im unteren Hohlraum 6 der gleiche Druck herrscht wie im Volumen 56 des Tauchrohrs 55.

Der im Volumen 56 des Tauchrohrs 55 herrschende Druck setzt sich zusammen aus einem Anteil, der entsprechend der Füllstandshöhe der Flüssigkeit im Tank 50 ist, und einem weiteren, im allgemeinen größeren Teil, der sich aus dem Druck des Gases im oberen Teilvolumen 53 des Tanks 50 ergibt, der auf die Oberfläche der Flüssigkeit im unteren Teil des Tanks 50 drückt und somit die Flüssigkeitssäule im Tauchrohr ebenfalls weiter nach oben drückt. Diese Komponente, die auf den Gasdruck im oberen Teilvolumen 53 zurückgeht, herrscht auch im oberen Hohlraum 5 des Drucksensors 1, so dass diese Komponente bei der Differenzmessung herausgekürzt wird. Die Differenzmessung gibt somit in erster Näherung ein direktes Maß der Füllstandshöhe der Flüssigkeit im Tank 50.

Auf der Oberseite des Drucksensors 1 sind elektronische Bauteile 16 dargestellt, die mit einem Anschluss 18 für die Messelektronik versehen sind, die nach außerhalb des Tanks 50 führen. Der entsprechende Anschluss 18 enthält beispielsweise sowohl Versorgungsspannung als auch Datenleitungen für analoge und/oder digitale Messsignale.

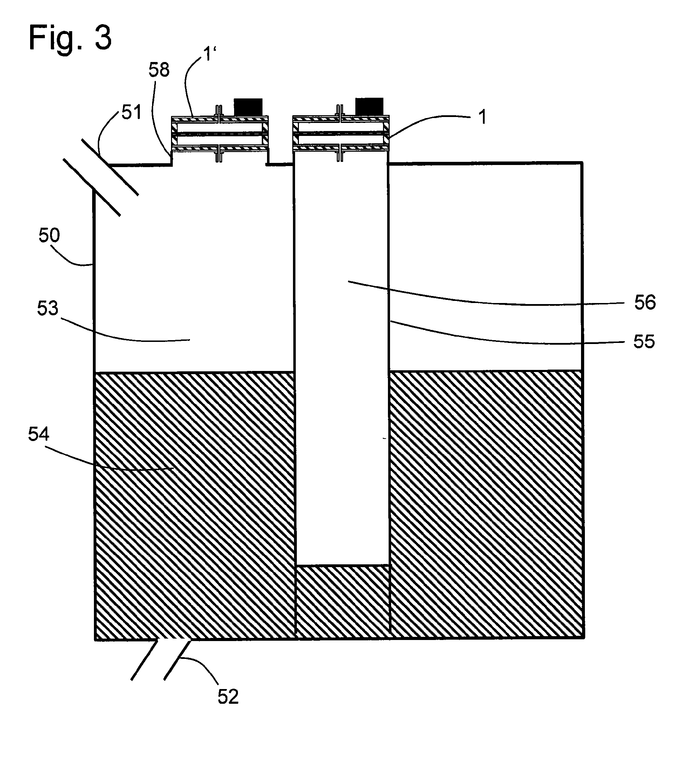

In Fig. 3 ist ein alternatives Ausführungsbeispiel einer erfindungsgemäßen Füllstandsmesseinrichtung gezeigt. Die in Fig. 3 dargestellte Füllstandsmesseinrichtung unterscheidet sich von der in Fig. 2 dargestellten darin, dass das Tauchrohr 55 nunmehr nicht vollständig im Tank enthalten ist, sondern aus dem Tank herausführt. Der entsprechende Drucksensor 1 ist mit seinem oberen Druckanschluss 11 gemäß Fig. 1 mit der äußeren Umgebungsatmosphäre verbunden und nicht mit dem oberen Teilvolumen 53 des Tanks 50, wie in Fig. 2.

Somit findet alleine auf der Grundlage des Drucksensors 1 nicht eine Differenzmessung zwischen dem Druck im Volumen 56 des Tauchrohrs 55 und dem Gas im oberen Teilvolumen 53 des Tanks 50 statt. Hierfür ist ein zweiter Drucksensor 1', der im Ausführungsbeispiel gemäß Fig. 3 gleichartig zu dem Drucksensor 1 ausgebildet ist, vorgesehen, der auf einem Anschlussstutzen an der Außenwand des Tanks 50 angebracht ist und eine Differenzmessung zwischen dem Druck der Umgebungsatmosphäre und dem Druck des Gases im oberen Teilvolumen 53 des Tanks 50 vornimmt. Beide Drucksensoren 1, 1' sind im Wesentlichen wie in Fig. 1 gezeigt ausgebildet.

Durch die Messung des Differenzdrucks zwischen Umgebungsatmosphäre und dem Volumen 56 des Tauchrohrs 55 durch den Drucksensor 1 einerseits und die Differenzmessung der Drücke der Umgebungsatmosphäre und des Gases im oberen Teilvolumen 53 des Tanks 50 mittels des Drucksensors 1' anderseits, die zueinander in Beziehung gesetzt werden, fällt der Druckanteil, der auf die Umgebungsatmosphäre zurückgeht, heraus und es ergibt sich wiederum eine Differenzmessung zwischen dem Druck des Gases im Volumen 56 des Tauchrohrs 55 einerseits und dem oberen Teilvolumen 53 des Tanks 50 andererseits. Da die beiden Drucksensoren 1, 1' außerdem gleichartig ausgeführt sind, kann eine Kalibrierung entfallen oder mit wenig Aufwand durchgeführt werden.

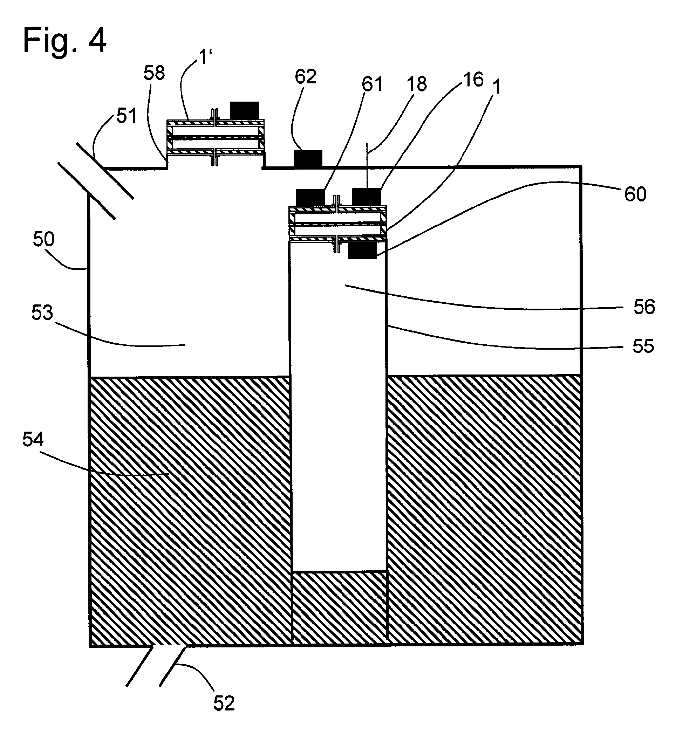

In Fig. 4 ist ein weiteres Ausführungsbeispiel einer erfindungsgemäßen Füllstandsmesseinrichtung dargestellt. Wie in Fig. 2 ist der Drucksensor 1 mit dem Tauchrohr 55 vollständig im Tank 50 angeordnet. Wie in Fig. 3 ist ein zweiter Drucksensor 1' in der Hülle des Tanks 50 angeordnet. Es erfolgt somit eine erste Differenzmessung der Drücke im Volumen 56 des Tauchrohrs 55 und im oberen Teilvolumen 53 des Tanks 50 und eine zweite Differenzmessung der Drücke und im oberen Teilvolumen 53 des Tanks 50 und der Umgebungsatmosphäre. Wie im Ausführungsbeispiel gemäß Fig. 3 wird gemäß Fig. 4 somit eine Referenzierung an den äußeren Atmosphärendruck erreicht, wobei die Druckdifferenzmessung zwischen dem Gas im Tank 50 und dem Gas im Tauchrohr 55 direkt erfolgt.

Zusätzlich sind Temperatursensoren 60, 61, 62 dargestellt, die im Tauchrohr 55, im Tank 50 und an der Außenseite des Tanks 50 angeordnet sind und die jeweils dort herrschenden Temperaturen messen. Die Temperatursensoren 60 und 61 sind an der Unterseite und der Oberseite des Drucksensors 1 angeordnet und können mit der ebenfalls dort angeordneten Elektronik 16 ausgelesen werden. Somit können Temperaturänderungen bei der Bestimmung der Füllhöhe im Tank 50 berücksichtigt werden.

Die erfindungsgemäßen Drucksensoren sind mechanisch stabil, so dass sie für eine Abdichtung, wie sie erfindungsgemäß bei einer Füllstandsmesseinrichtung erforderlich ist, geeignet sind. Dies gilt auch für Anwendungen bei der Füllstandsmessung von Kraftfahrzeugtanks, die mit Benzin, Diesel oder anderen brennbaren Flüssigkeiten gefüllt sind.

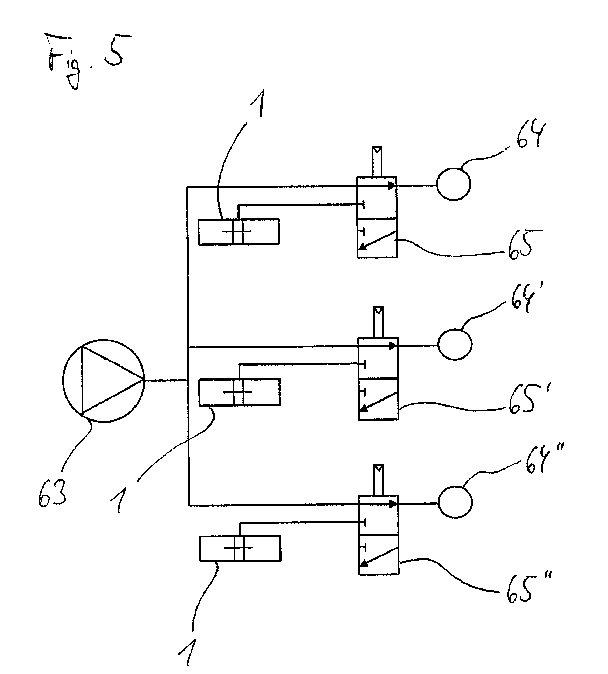

In Fig. 5 ist ein pneumatisches System schematisch dargestellt, in dem Druckluft durch einen Kompressor 63 erzeugt wird und durch pneumatische Leitungen zu steuerbaren 3/2-Wege-Ventilen 65 bis 65" geleitet wird. Diese befinden sich in einer Position, in der Druckluft an Verbraucher 64 bis 64" geleitet wird. In der entgegengesetzten Einstellung der Ventile 65 bis 65" sind die Verbraucher 64 bis 64" mit jeweils einem kapazitiven Drucksensor 1 verbunden, dessen entgegengesetzter Ausgang zur Atmosphäre hin offen ist. Der jeweilige kapazitive Drucksensor 1 misst somit die Druckdifferenz des Drucks im jeweiligen Verbraucher 64 bis 64" zum Atmosphärendruck. Anstelle der Schaltung gemäß Fig. 5 können die kapazitiven Drucksensoren 1 auch direkt mit den Verbrauchern 64 - 64" verbunden sein, so dass ihre fortlaufende Druckmessung zur Steuerung der 3/2-Wege-Ventile 65 - 65" verwendbar ist.

Anstelle von 3/2-Wege-Ventilen können auch andere Ventile eingesetzt werden. Es kann auch ein Sperrventil verwendet werden, an dessen Eingang ein Kompressor angeschlossen ist und an dessen Ausgang eine Leitung angeschlossen ist, die zu einem kapazitiven Drucksensor und zu einem Verbraucher abzweigt, so dass diese jederzeit miteinander verbunden sind.

Das in Fig. 5 gezeigte pneumatische System kann als Verbraucher 64 - 64" beispielsweise Kissen eines Autositzes oder eines Komfort- oder Massagesitzes mit Sitzeinstellungs- oder Massagefunktion mit Druckluft versorgen.

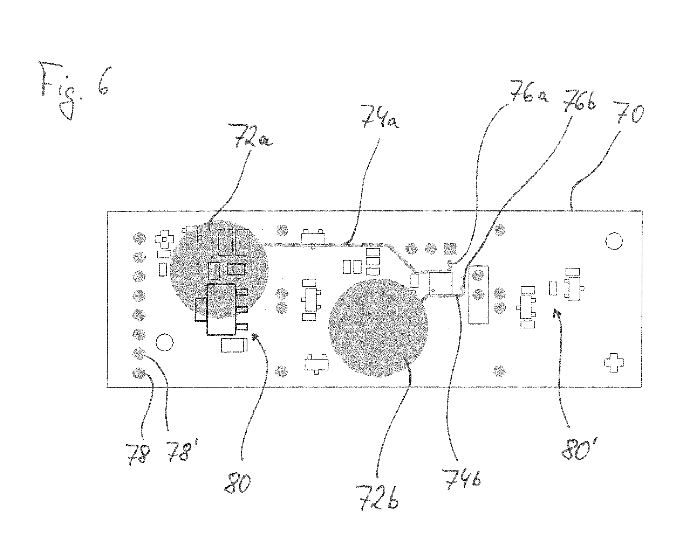

In Fig. 6 ist eine Leiterplatte 70 in einer Draufsicht schematisch dargestellt, die beispielsweise ein oberstes Leiterplattensubstrat 22 aus Fig. 1 sein kann. Die in Fig. 6 dargestellte Leiterplatte 70 verfügt auf seiner Unterseite über zwei kreisrunde metallische Beschichtungen als Elektroden 72a, 72b für zwei Drucksensoren. Die Elektroden 72a, 72b sind jeweils mit Leiterbahnen 74a, 74b kontaktiert, die in Kontaktierungspunkten 76a, 76b enden. Es sind weitere metallisch beschichtete Kontaktierungspunkte 78, 78' über die Unterseite der Leiterplatte 70 verteilt angeordnet. Auf der Oberseite sind elektrische, elektronische und elektropneumatische Bauteile 80, 80' angeordnet, die die elektronische Ansteuerung und Auswertung der Drucksensoren übernehmen.

Die Flächen zwischen den Elektroden 72a, 72b, Leiterbahnen 74a, 74b, Kontaktierungspunkten 76a, 76b und 78, 78' sind nicht beschichtet und nicht elektrisch leitend. Die metallisch leitend beschichteten Flächen der Elektroden 72a, 72b entsprechen in Fig. 6 den Abmessungen der Hohlräume der kapazitiven Drucksensoren. Die Beschichtung kann im Vergleich zum Durchmesser des jeweiligen Hohlraums aber auch etwas größer oder etwas kleiner sein.

Anstelle einer Leiterplatte 70 mit Elektroden 72a, 72b, die an ihrer Oberseite mit Bauteilen 80, 80' bestückt ist, kann die Leiterplatte 70 auch als beidseitig mit den Elektroden 72a, 72b, Leiterbahnen 74a, 74b und Kontaktierungspunkten 76a, 76b beschichtete Leiterplatte ausgebildet sein. Die beidseitig beschichtete Leiterplatte ist in dem Fall ein flächiger Membrankörper im Sinne der Erfindung, wobei darauf achtgegeben werden muss, dass die Kontaktierungspunkte 76a, 76b an anderen Stellen angeordnet werden als die Kontaktierungspunkte der anderen Flächenkörper.

Der erfindungsgemäße kapazitive Drucksensor hat vielfältige Einsatzmöglichkeiten in pneumatischen Anwendungsfällen. Dies reicht über die Druckmessung in Steuerungen für aufblasbare Kissen von Komfort- oder Massagesitzen, Sitzen von Kraftfahrzeugen, in Saugrohren von Kraftfahrzeugen, beispielsweise Motorrädern, in Druckluftsystemen von Lastkraftwagen, Schienenfahrzeugen und Luftfahrzeugen bis hin zu stationären Anwendungen.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1, 1': kapazitiver Drucksensor
- 2: erster Grundflächenkörper
- 3: flächiger Membrankörper
- 4: zweiter Grundflächenkörper
- 5, 6: Hohlraum
- 7, 8: Abstandhalter
- 9, 10: Öffnung
- 11, 12: Druckanschluss
- 13, 14: Elektrodenanschluss
- 15: Anschluss für Erdung
- 16: elektronische Bauteile
- 17: Kabelanschlüsse
- 18: Anschluss für Messelektronik
- 21: metallische Schicht
- 22: Leiterplattensubstrat
- 23: metallische Schicht
- 31: metallische Schicht
- 32: Leiterplattensubstrat
- 33: metallische Schicht
- 41: metallische Schicht
- 42: Leiterplattensubstrat
- 43: metallische Schicht
- 50: Tank
- 51: Tankeinlass
- 52: Tankauslass
- 53: oberes Teilvolumen
- 54: unteres Teilvolumen
- 55: Tauchrohr
- 56: Volumen im Tauchrohr
- 58: Anschlussstutzen
- 60 - 61: Temperatursensoren
- 62: Temperatur- und Drucksensor
- 63: Kompressor
- 64 - 64": Verbraucher
- 65 - 65": 3/2-Wege-Ventil
- 70: Leiterplatte
- 72a, 72b: Elektroden eines Drucksensors
- 74a, 74b: Leiterbahn
- 76a, 76b: Kontaktierungspunkt
- 78, 78': beschichtete Kontaktpunkte
- 80, 80': elektronische und elektropneumatische Bauelemente

## Patentansprüche

1. Kapazitiver Drucksensor (1, 1') mit einem ersten Grundflächenkörper (2, 70), einem zweiten Grundflächenkörper (4) und einem zwischen dem ersten Grundflächenkörper (2, 70) und dem zweiten Grundflächenkörper (4) mittels wenigstens eines Abstandhalters (7, 8) befestigten flächigen Membrankörper (3), wobei wenigstens an einer Seite des Membrankörpers (3) ein Hohlraum (5, 6) ausgebildet ist, der von einer Seite des Membrankörpers (3), einem Abstandhalter (7, 8) und einer Seite eines Grundflächenkörpers (2, 4, 70) begrenzt ist, wobei der Grundflächenkörper (2, 4, 70) wenigstens eine den Grundflächenkörper (2, 4, 70) durchdringende Öffnung (9, 10) aufweist, die den Hohlraum (5, 6) mit einem Volumen außerhalb des Drucksensors (1) verbindet, so dass sich bei einer Druckänderung in dem Hohlraum (5, 6) das Volumen des Hohlraums (5, 6) durch Durchbiegung des Membrankörpers (3) verändert, wobei wenigstens die den Hohlraum (5, 6) begrenzenden Flächen des Grundflächenkörpers (2, 4, 70) und des Membrankörpers (3) eine metallische Schicht (23, 31, 33, 41) oder Beschichtung aufweisen, **dadurch gekennzeichnet, dass** die Grundflächenkörper (2, 4, 70) und der Membrankörper (3) als Leiterplatten auf der Basis eines nichtleitenden Leiterplattensubstrats (22, 32, 42) ausgebildet sind.

2. Kapazitiver Drucksensor (1, 1') nach Anspruch 1, **dadurch gekennzeichnet, dass** beidseits des Membrankörpers (3) mittels Abstandhaltern (7, 8) Hohlräume (5, 6) ausgebildet sind und die die Hohlräume (5, 6) begrenzenden Flächen der Grundflächenkörper (2, 4, 70) und des Membrankörpers (3) eine metallische Schicht (23, 31, 33, 41) oder Beschichtung aufweisen.

3. Kapazitiver Drucksensor (1, 1') nach Anspruch 1 oder 2, **dadurch gekennzeichnet, dass** wenigstens ein Grundflächenkörper (2, 4, 70) auch an der Außenseite des Drucksensors (1) eine metallische Schicht (21, 43) oder Beschichtung aufweist, wobei insbesondere an der eine metallische Schicht (21, 43) oder Beschichtung aufweisenden Außenseite elektronische Bauteile (16, 80, 80') und/oder Kabelanschlüsse (17, 78, 78') angeordnet sind.

4. Kapazitiver Drucksensor (1, 1') nach einem der Ansprüche 1 bis 3, **dadurch gekennzeichnet, dass** ein Temperatursensor (61) umfasst ist, der insbesondere an einer der Außenseiten des Drucksensors (1, 1') angeordnet ist.

5. Kapazitiver Drucksensor (1, 1') nach Anspruch 3 oder 4, **dadurch gekennzeichnet, dass** die elektronischen Bauteile (16, 80, 80') und/oder metallischen Flächen der Kabelanschlüsse (17, 78, 78') eingekapselt sind.

6. Kapazitiver Drucksensor (1, 1') nach einem der Ansprüche 1 bis 5, **dadurch gekennzeichnet, dass** eine Durchkontaktierung zum Membrankörper (3) und/oder zu einem Grundflächenkörper (2, 4, 70) in Form einer metallisierten, insbesondere aufgekupferten, Bohrung durch einen Grundflächenkörper (2, 4, 70), den Membrankörper (3) und/oder einen Abstandhalter (7, 8) ausgebildet ist.

7. Kapazitiver Drucksensor (1, 1') nach einem der Ansprüche 1 bis 6, **dadurch gekennzeichnet, dass** der Membrankörper (3) auf einem Leiterplattensubstrat (32) mit einer Dicke zwischen 100 und 200 µm, insbesondere etwa 150 µm, basiert.

8. Kapazitiver Drucksensor (1, 1') nach einem der Ansprüche 1 bis 7, **dadurch gekennzeichnet, dass** der Membrankörper (3) und/oder die Grundflächenkörper auf einem Leiterplattensubstrat (32) auf der Grundlage eines Glasfasergewebes oder eines Glasvlieses basiert.

9. Matrix kapazitiver Drucksensoren (1, 1') nach einem der Ansprüche 1 bis 8, die in einer gemeinsamen Leiterplattenanordnung aus Grundflächenkörpern (2, 4, 70), Membrankörper (3) und Abstandhalter (7, 8) zusammen oder nebeneinander angeordnet sind.

10. Füllstandsmesseinrichtung für einen Flüssigkeitstank (50), dessen Volumen im befüllten Zustand in ein unteres Teilvolumen (54) mit Flüssigkeit und ein oberes Teilvolumen (53) mit einem gasförmigen Medium aufgeteilt ist, umfassend ein im Tank (50) angeordnetes Tauchrohr (55), das in einem Volumen (56) ein gasförmiges Medium beinhaltet und nach unten offen ist und in einem wenigstens teilweise befüllten Zustand des Flüssigkeitstanks (50) in die Flüssigkeit eintaucht, **dadurch gekennzeichnet, dass** das Tauchrohr (55) an seinem oberen Ende von einem kapazitiven Drucksensor (1), insbesondere nach einem der Ansprüche 1 bis 8, abgedichtet ist, der an einer Oberseite und einer Unterseite des Drucksensors (1) jeweils eine Druckanschlussöffnung (9, 10) aufweist, wobei die Druckanschlussöffnung (9, 10) an der Unterseite einen Einlass für das gasförmige Medium im Tauchrohr (55) bildet.

11. Füllstandsmesseinrichtung nach Anspruch 10, **dadurch gekennzeichnet, dass** der Drucksensor (1) im oberen Teilraum des Tanks (50) angeordnet ist und die Druckanschlussöffnung (9) an der Oberseite des Drucksensors (1) einen Einlass für das gasförmige Medium im oberen Teilraum (53) des Tanks (50) bildet, wobei insbesondere der Drucksensor (1) in oder außerhalb einer Außenwandung des Tanks (50) angeordnet ist und die Druckanschlussöffnung (9) an der Oberseite des Drucksensors (1) einen Einlass für ein gasförmiges Medium außerhalb des Tanks (50) bildet.

12. Füllstandsmesseinrichtung nach Anspruch 10 oder 11, **dadurch gekennzeichnet, dass** ein zweiter kapazitiver Drucksensor (1'), insbesondere nach einem der Ansprüche 1 bis 9, in oder am Tank (50) angeordnet ist, der an zwei Seiten jeweils eine Druckanschlussöffnung (9, 10) aufweist, von denen eine Druckanschlussöffnung (10) mit dem gasförmigen Medium im oberen Teilvolumen (53) des Tanks (50) verbunden ist und die andere Druckanschlussöffnung (10) mit dem gasförmigen Medium außerhalb des Tanks (50) verbunden ist.

13. Füllstandsmesseinrichtung nach einem der Ansprüche 10 bis 12, **dadurch gekennzeichnet, dass** ein außerhalb oder an der Außenseite des Tanks (50) angeordneter Drucksensor zur Messung des Drucks in der Umgebung des Tanks umfasst ist und/oder ein oder mehrere Temperatursensoren (60 - 62) im Tauchrohr (55) und/oder im Tank (50) und/oder außerhalb des Tanks (50) angeordnet ist oder sind.

14. Druckmesseinrichtung zur Messung eines Drucks in einem pneumatischen System, **dadurch gekennzeichnet, dass** ein kapazitiver Drucksensor nach einem der Ansprüche 1 bis 8 zur Druckmessung umfasst ist.

15. Verwendung wenigstens eines kapazitiven Drucksensors (1, 1') nach einem der Ansprüche 1 bis 8 in einem Sitz, insbesondere Komfort- oder Massagesitz und/oder Autositz, mit einem oder mehreren mit Druckluft beaufschlagbaren aufblasbaren Kissen, in einem Beatmungsgerät oder in einer Anschlussplatte für Aktuatoren, die eine bauliche Einheit aus einer Leiterplatte mit wenigstens einer Leiterbahn und einer Kanalplatte mit Fluidkanälen für ein Fluid aufweist, wobei insbesondere der wenigstens eine kapazitive Drucksensor (1, 1') zur Druckmessung an einem Fluid eine Verbindung mit einem Fluidkanal aufweist
